# EUROPÄISCHE PATENTSCHRIFT

(11) **EP 0 933 018 B1**
(45) Veröffentlichungstag und Bekanntmachung des Hinweises auf die Patenterteilung: **27.11.2002**
(21) Anmeldenummer: 99100906.9
(22) Anmeldetag: 20.01.1999
(51) Int. Cl.: A01F 15/08

(54) **Aufsammelkolbenpresse**
Ram-type pick-up baler
Ramasseuse-presse à piston

(30) Priorität: 31.01.1998 DE 19803835
(43) Veröffentlichungstag der Anmeldung: 04.08.1999
(73) Patentinhaber: Maschinenfabrik Bernard Krone GmbH, 48480 Spelle (DE)
(72) Erfinder: Krone, Bernard,E.h.,Dipl. Ing., 48480 Spelle (DE); Weddeling, Otger Dipl.-Ing., 33428 Harsewinkel (DE); Steglich, Christian Dr.-Ing., 49832 Freren (DE); Wernsmann, Thomas Dipl.-Ing., 48282 Emsdetten (DE)

(56) Entgegenhaltungen:
- WO-A-94/24845
- DE-A- 19 627 397
- DE-U- 29 514 322
- DE-U- 29 601 671
- DE-U- 29 703 621
- GB-A- 2 032 376

## Beschreibung

Die Erfindung bezieht sich auf eine Aufsammelkolbenpresse zur Herstellung von Rechteckballen aus landwirtschaftlichem Erntegut, wie beispielsweise Heu, Stroh oder angewelktem Grüngut, nach dem Oberbegriff des Anspruches 1. Derartige und für sich bekannte Aufsammelkolbenpressen bestehen im wesentlichen aus einer Aufnahmetrommel zur Aufnahme des Erntegutes vom Erdboden, an die sich ein Schneidrotor mit einem nachgeordneten Förderrechen anschließt, so daß dadurch das Erntegut einem Preßkanal mit einem in diesem über einen Kurbelantrieb hinund hergeführten Preßkolben zugeführt werden kann. Zum Antrieb einer solchen Aufsammelkolbenpresse kann beispielsweise ein landwirtschaftlicher Ackerschlepper oder dgl. Zug- und Antriebsmaschine vorgesehen sein. Beim Betrieb solcher Aufsammelkolbenpressen kommt es vor, daß sich beim Inbetrieb- und auch beim Außerbetriebsetzen der Aufsammelkolbenpresse noch ein Restballen mit einem Rest an unverdichtetem Erntegut im Preßkanal befindet. Letzteres Erntegut setzt dem an- bzw. auslaufenden Preßkolben eine derartige Reaktionskraft entgegen, daß der den Preßkolben bewegende Kurbelantrieb den Totpunkt in der Strecklage nicht mehr überschreitet. Sämtliche Förder- und Schneidorgane der Aufsammelkolbenpresse werden hierdurch zurückgedreht, und es besteht hierbei die Gefahr, daß Erntegut infolge der Rückdehnung des Restballens im Preßkanal bei gleichzeitigem großen Schwungmoment von Schwungscheibe und Preßkolben gegen den Rücken von Schneidmessern der Schneidorgane gedrückt wird und hierbei die Schneidmesser beschädigt werden oder sogar abbrechen. Man hat hier bereits Abhilfe geschaffen, indem man im Antrieb des Schneidrotors eine Freilaufkupplung vorgesehen hat.

Beim praktischen Einsatz von Aufsammelkolbenpressen ist es ferner nicht ganz vermeidbar, daß es beispielsweise auf Grund von Fremdkörpern oder Erntegutanhäufungen in den von der Aufnahmetrommel aufgenommenen Schwaden im Bereich des Schneidrotors zu Verstopfungen kommen kann, wobei Verstopfungen durch Erntegutanhäufungen in der Regel durch ein kurzzeitiges und vom Fahrersitz aus bedienbares Ausschwenken der Schneidmesser aus dem Förderkanal zu beseitigen sind. Letztere bei einem Ladevorgang auftretende Störung versucht man auch bereits durch Umkehrung der Fördervorrichtung (Reversierung) zu beheben. Hierzu offenbart die GB-A-2 032 376 bei einem Ladewagen eine Fördervorrichtung, dessen Förderelemente mit Schneidmessern eines Schneidwerkes zusammenarbeiten. Hierbei sind die Schneidmesser derartig in oder an Führungen am Fahrzeugrahmen befestigt, daß sie beim Überschreiten einer vorbestimmten Schneidkraft über die Schneidkraft selbst verstellbar sind. Auf Grund der Bewegung der Schneidmesser reagiert ein Druckauslöseschalter, der auf elektrischem Wege eine elektromagnetische Kupplung zur Unterbrechung des Antriebes der Fördervorrichtung und zum Einschalten einer zweiten Kupplung für ein Umkehrgetriebe und damit zu einer Umkehr der Förderrichtung der Fördervorrichtung führt. Bekanntlich haben diese Fördervorrichtungen mehrere Förderelemente auf dem Umfang einer Fördertrommel verteilt angeordnet, so daß aufeinanderfolgend mehrere Förderelemente im Förderkanal hintereinander angeordnet sind und Erntegut fördern. Der Zeitpunkt, in dem sich ein Schneidmesser auf Grund einer Überschreitung der vorbestimmten Schneidkraft verschiebt, kann deshalb gerade dann erfolgen, wenn das Förderelement an der Oberkante des Schneidmessers vorbeigleitet. Bei einer automatischen Umkehrung der Förderrichtung der Förderelemente drücken diese nun in Verbindung mit dem im Förderkanal befindlichen Erntegut vom Rücken her auf die Schneidmesser und belasten diese von der oberen Messerkante her, was zu einer Zerstörung der Fördervorrichtung führt. Diese Nachteile führten auch dazu, daß solche Fremdkörpersicherungen nicht in der Praxis eingeführt wurden. Ferner ist die Fremdkörpersicherung auch sehr bauaufwendig und entsprechend teuer.

In der DE 195 34 138 C1 wird eine als Wagenkolbenpresse bezeichnete Ballenpresse offenbart, bei der zur Beseitigung von Verstopfungen im Bereich des Schneidrotors ein Rückdrehantrieb für den Schneidrotor vorgeschlagen wird, der im wesentlichen von einem auf der Antriebswelle des Schneidrotors gelagerten Schwenkhebel mit einer daran angebrachten und in einem Klinkenrad eingreifenden Klinke gebildet und vorzugsweise von einem Hydraulikzylinder betätigbar ist. Durch diesen Rückdrehantrieb wird es ermöglicht, den Schneidrotor beim Auftreten einer Verstopfung zurückzudrehen und so die Verstopfung aufzulösen. Beim Zurückdrehen des Schneidrotors müssen natürlich alle anderen Förder- und Preßaggregate ebenfalls zurückgedreht werden, wobei es durchaus vorkommen kann, daß der im Preßkanal hin und her geführte Preßkolben entgegen dem Widerstand eines entstehenden Erntegutballens zurückbewegt werden muß. Daraus ergibt sich, daß bei der Auslegung des vorstehend beschriebenen Rückdrehantriebes von einem großen Kraftbedarf und darausfolgend von einem erheblichen konstruktiven Bauaufwand mit erheblichen Kosten ausgegangen werden muß.

In der WO-A-94 24 845 ist eine selbstfahrende Großballenpresse offenbart. Wie den einzelnen Figuren der Zeichnung zu entnehmen ist, weist diese Großballenpresse insbesondere eine Kraftübertragungseinrichtung zum Antrieb eines Hauptgetriebes auf. Von dem Hauptgetriebe zweigt ein Kurbeltrieb zum Antrieb eines in einem Preßraum hin- und hergehenden Preßelementes in der Form eines stempelartig ausgebildeten Kolbens ab. Neben dem Kurbeltrieb erfolgt vom Hauptgetriebe aus eine weitere Abzweigung von Antriebssträngen für einen Förderelemente aufweisenden Zwischenförderer und dessen Steuervorrichtung sowie für eine der Preßeinrichtung zugeordneten Bindeeinrichtung mit Knotern und Nadelschwinge. Vom Zwischenförderer wird dem Preßraum das Erntegut zugeführt. Gemäß den Darstellungen bestehen sämtliche Abtriebs- bzw. Antriebsverbindungen der Abzweigungen aus festen Verbindungsteilen wie Gehäuse aufweisende Getriebeeinheiten mit festen Verbindungsteilen wie z.B. eine Welle zur Übertragung eines Drehmomentes. Diese Verbindungsart ist auch erforderlich, da das Hauptgetriebe mit den über die Abzweige angetriebenen weiteren Presseneinheiten voneinander abhängig betrieben werden, so daß diese Antriebe schlupffrei arbeiten müssen. Ein dem Zwischenförderer zugeordneter Abstreifer- und Schneidmesser aufweisender Förder- und Schneidrotor ist nicht offenbart. Die bereits aufgeführte Kraftübertragungseinrichtung befindet sich in den dargestellten Ausführungsformen vor dem Hauptgetriebe und vor der dem Hauptgetriebe zugeordneten Schwungmasse (Schwungscheibe) sowie einem als Fördereinrichtung wirkenden Förderband mit vorgeordneter Aufnahmeeinrichtung.

Die Kraftübertragungseinrichtung ist schaltbar und überträgt die Antriebskraft einer Brennkraftmaschine (stationärer Motor) auf das Hauptgetriebe und über einen ebenfalls schaltbaren abzweigenden Abtrieb auf eine Fördereinrichtung und auf eine dieser vorgeordneten Aufnahmeeinrichtung. Die Kraftübertragungseinrichtung besteht aus zwei Riemenscheiben, die über einen Riemen miteinander verbunden und mit Hilfe einer Andruckrolle ein schaltbares Getriebe bilden (Riemengetriebekupplung). Das so gebildete Getriebe ermöglicht einen Freilauf in der Art, daß die Andruckrolle im eingeschalteten Zustand der Kraftübertragungseinrichtung auf den Riemen drückt und diesen spannt, während der Freilauf durch Wegnehmen des Druckes freigegeben wird. Das in der Veröffentlichung beschriebene Riemengetriebe mit Andruckrolle wird insgesamt als Freilauf bezeichnet, es hat jedoch nicht die Eigenschaften eines in der technischen Fachliteratur gekennzeichneten Freilaufes. Ein Freilauf ist laut Fachliteratur eine "richtungsgeschaltete Kupplung", die sowohl im eingeschalteten (belasteten) als auch im ausgeschalteten (unbelasteten) Zustand in einer Drehrichtung entsperrt bzw. freilaufend ist. Ein in der WO-A-94 24 845 offenbarter Freilauf in der Art eines Riemengetriebes mit Andruckrolle läßt sich bei Aufsammelkolbenpressen mit einem antriebsmäßig von einem Hauptgetriebe abgezweigten Antriebsstrang für den Antrieb eines Förder- und Schneidrotors nicht verwenden, da hierdurch die eingangs aufgeführte Beschädigung von Schneidmessern beim Inbetriebsetzen der Aufsammelkolbenpresse nicht zu beseitigen sind. Riemengetriebe haben nach dem Spannen der Andruckrolle in keiner Drehrichtung einen Freilaufzustand und eignen sich auch nicht für einen Reversierungsbetrieb, da bei einer Drehrichtungsumkehr die Andruckrolle mit der Zugkraft des Riemens belastet wird.

Die DE 295 14 322 U1 beschreibt eine Aufsammelpresse für landwirtschaftliches Erntegut mit zumindest einem in zwei Drehrichtungen antreibbaren Schneidwerksrotor an Rundballenpressen, dessen Drehrichtung zur Beseitigung von Gutverstopfungen umkehrbar ist. Ein Ausführungsbeispiel zeigt in der Antriebsverbindung des Schneidwerksrotors einen doppelten Freilauf mit einer Klinkensperre, dessen eines Klinkenpaar den Schneidwerksrotor in Arbeitsrichtung mitnimmt, während es in entgegengesetzter Rückwärtsdrehrichtung den Schneidwerksrotor vom Antrieb entkoppelt, wobei dann ein zweites, in Rückwärtsdrehung wirksames Klinkenpaar eine Antriebsverbindung herstellt, wodurch der Schneidwerksrotor um ca. 90°, aber kleiner als 180°, zurückgedreht wird.

Bekanntlich haben Rundballenpressen gegenüber Aufsammelkolbenpressen ein ganz anderes Preßverfahren. Rundballenpressen pressen im Rollverfahren und ohne einen Preßkolben. Wie bereits beschrieben, wirken bei Aufsammelkolbenpressen - bedingt durch einen ungebundenen Restballen im Preßkanal - Reaktionskräfte durch Rückdrehung des Erntegutes auf den Preßkolben, die eine Drehrichtungsumkehr der Antriebsverbindung bewirken, die wiederum zu Beschädigungen der Schneidmesser des Schneidorgans führen. Es werden deshalb Freilaufkupplungen bei bekannten Aufsammelkolbenpressen im Antrieb des Schneidrotors verwendet, die eine Drehrichtungsumkehr der Arbeitsdrehrichtung bei Normalbetrieb ausschließen. Ein doppelter Freilauf mit Klinkensperre gemäß der DE 295 14 322 U1 ist wenigstens im Bereich eines Verdrehungswinkels von ca. 90° in beiden Drehrichtungen gesperrt und in diesem Bereich als feste Verbindung zwischen Antrieb und Abtrieb anzusehen. Er läßt sich deshalb bei einer Aufsammelkolbenpresse konstruktiv nicht sinnvoll einsetzen, da jegliche Rückdrehbewegung sowohl des Schneidrotors als auch der vorgeordneten Aufnahmeeinrichtung beim Normalbetrieb der Aufsammelkolbenpresse unerwünscht ist. Es werden deshalb Freilaufkupplungen bei bekannten Aufsammelkolbenpressen im Antrieb des Schneidrotors verwendet, die eine Drehrichtungsumkehr der Arbeitsdrehrichtung bei Normalbetrieb ausschließen.

Unter Beibehaltung letzterer Vorteile ist es Aufgabe der Erfindung, den Antrieb einer Aufsammelkolbenpresse der vorstehend genannten Art so auszubilden, daß eine einfache und kostengünstig herstellbare, eine minimale Kraftanstrengung erfordernde Rückdreheinrichtung für den Förder- und Schneidrotor entsteht, mit der eine beim Normalbetrieb entstandene Verstopfung außerhalb des Normalbetriebes zu beseitigen ist.

Zur Lösung der gestellten Aufgabe zeichnet sich die Aufsammelkolbenpresse der vorstehend genannten Art durch die im Anspruch 1 angegebenen Merkmale aus. Hinsichtlich der weiteren Ausgestaltung der Erfindung wird auf die Ansprüche 2 bis 15 verwiesen.

Bei einer Aufsammelkolbenpresse mit den Merkmalen der Erfindung wird eine Lösung aufgezeigt, wie in einer einfachen Art und Weise ein gezieltes und nur minimale Kraftanstrengungen erforderndes Zurückdrehen eines Förder- und Schneidrotors beispielsweise zur Beseitigung einer Verstopfung im Bereich des Förder- und Schneidrotors durchführbar ist. Dabei ist es erforderlich, den Freilaufzustand einer in einem Antriebsstrang zwischen einem Hauptgetriebe der Aufsammelkolbenpresse und dem Förder- und Schneidrotor befindlichen Freilaufkupplung aufzuheben und nach dem Zurückdrehen des Förder- und Schneidrotors den Freilaufzustand wieder herzustellen. Durch das Aufheben des Freilaufzustandes der Freilaufkupplung in dem Antriebsstrang zwischen dem Hauptgetriebe und dem Förder- und Schneidrotor wird dem Bediener der Aufsammelkolbenpresse die Möglichkeit gegeben, unter Ausnutzung der günstigen Übersetzungsverhältnisse den Förder- und Schneidrotor beispielsweise im Falle einer Verstopfung von einer dem Hauptgetriebe vorgeordneten Schwungscheibe aus zurückzudrehen und dadurch die Verstopfung aufzulösen.

Erfindungsgemäß ist zum Aufheben und Wiederherstellen des Freilaufzustandes der Freilaufkupplung eine Schaltungsanordnung vorgesehen, welche vorzugsweise eine mit Mitnehmern versehene Schiebemuffe beinhaltet, die mit einem eine stirnseitig angebrachte Verzahnung aufweisenden Freilaufgehäuse der Freilaufkupplung in Eingriff bringbar ist. Vorteilhafterweise beinhaltet die Schaltungsanordnung eine Schalthebelanordnung, durch die der Eintritt einer formschlüssigen Verbindung zwischen der Schiebemuffe und dem Freilaufgehäuse vorwählbar ist. Das bedeutet, daß durch eine Überführung eines Schalthebels der Schalthebelanordnung aus einer Ruhestellung in eine Vorwahlstellung die Schiebemuffe beispielsweise mit einer durch Federelemente aufgebrachten Vorspannkraft beaufschlagt wird, so daß bei einer Übereinstimmung der Mitnehmer der Schiebemuffe mit den Zahnlücken der Verzahnung des Freilaufgehäuses selbsttätig eine formschlüssige Verbindung zwischen der Schiebemuffe und dem Freilaufgehäuse hergestellt wird.

Eine Einleitung der Rückdrehbewegung des Förder- und Schneidrotors kann erfindungsgemäß manuell durch den Bediener oder mittels einer Hilfsantriebseinrichtung erfolgen, welche vorzugsweise mit einer dem Hauptgetriebe vorgeordneten Schwungscheibe für den Zeitraum des Zurückdrehens in Eingriff bringbar ist. Die Hilfsantriebseinrichtung kann hierzu in vorteilhafter Art und Weise als eine elektrisch oder hydraulisch angetriebene Einrichtung ausgebildet sein.

Gemäß einem weiteren vorteilhaften Aspekt der Erfindung ist es vorgesehen, daß nach der erfolgten Auflösung der Verstopfung der Freilaufzustand der Freilaufkupplung selbsttätig wieder hergestellt wird. Dieser Vorgang kann beispielsweise durch eine Drehrichtungsumkehr aus der Rückdrehrichtung in die Arbeitsdrehrichtung eingeleitet werden, wobei dann durch ein Abgleiten von rückwärtigen Zahnschrägen der Verzahnung des Freilaufgehäuses und von Mitnehmern der Schiebemuffe die Wiederherstellung des Freilaufzustand der Freilaufkupplung erfolgt. Zur Unterstützung des Trennvorganges der formschlüssigen Verbindung zwischen der Schiebemuffe und dem Freilaufgehäuse können auch Federelemente vorgesehen sein.

Eine detaillierte Beschreibung des Gegenstandes der Erfindung erfolgt nun anhand von Ausführungsbeispielen. In der Zeichnung stellt im einzelnen dar:
- Fig.1: eine schematische Gesamtseitenansicht einer erfindungsgemäßen Aufsammelkolbenpresse;
- Fig.2: eine teilweise abgebrochene, vergrößerte Darstellung der Einzelheit X aus Fig.1;
- Fig.3: eine Schnittdarstellung des Verteilergetriebes gemäß Schnitt III-III in Fig.2 in einer Stellung, in der der Freilaufzustand der Freilaufkupplung nicht aufgehoben ist;
- Fig.4: eine Schnittdarstellung des Verteilergetriebes gemäß Schnitt III-III in Fig.2 in einer Stellung, in der der Freilaufzustand der Freilaufkupplung aufgehoben ist;
- Fig.5: eine Ansicht des Verteilergetriebes aus einer in Fahrtrichtung gerichteten Blickrichtung mit einer teilweise geschnitten dargestellten Schalthebelanordnung;
- Fig.6: eine Schnittdarstellung des Verteilergetriebes gemäß Schnitt VI-VI in Fig.5;
- Fig.7: eine Schnittdarstellung der Freilaufkupplung gemäß Schnitt VII-VII in Fig.4;
- Fig.8: ein weiteres Ausführungsbeispiel einer erfindungsgemäßen Schaltungsanordnung;
- Fig.9: eine teilweise abgebrochene, vergrößerte Darstellung der Einzelheit Y aus Fig.2;

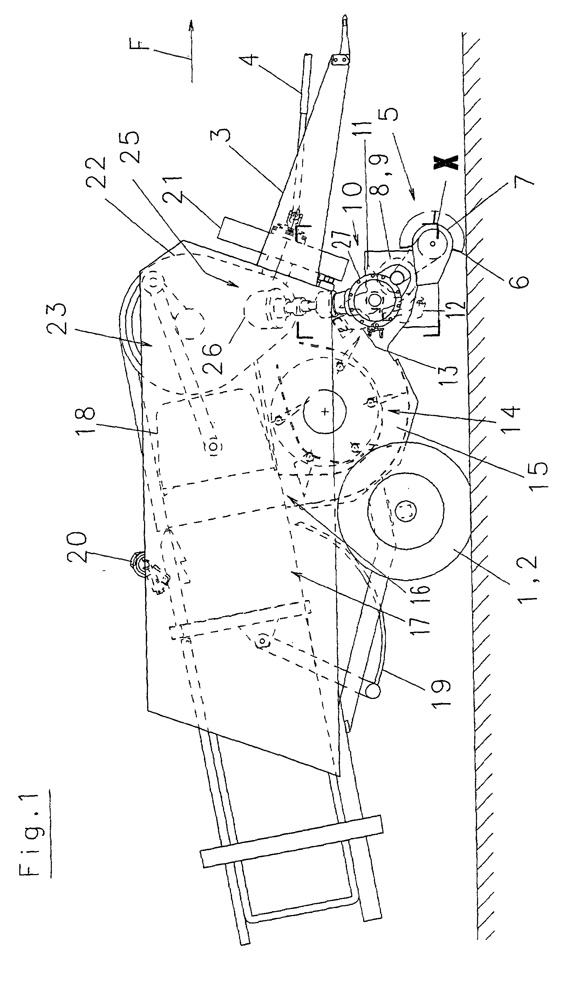

Die in Fig. 1 dargestellte Aufsammelkolbenpresse stützt sich auf Rädern 1,2 zum Erdboden hin ab und ist über eine Zugdeichsel 3 mit einer nicht dargestellten landwirtschaftlichen Zug- und Arbeitsmaschine verbindbar, wobei der Antrieb von der Zapfwelle der Zug- und Arbeitsmaschine aus über eine Gelenkwelle 4 erfolgt. Die Aufsammelkolbenpresse verfügt über eine Aufnahmeeinrichtung 5, durch die in Schwaden liegendes Erntegut wie beispielsweise Stroh, Heu oder angewelktes Grüngut von einer Feld- bzw. Wiesenfläche aufhebbar ist. Die Aufnahmeeinrichtung 5 ist im veranschaulichten Ausführungsbeispiel als eine mit Zinken 6 bestückte Aufnahmetrommel 7 bekannter Bauweise ausgeführt, welcher Querförderschnekken 8,9 zur Verringerung der Breite des aufgenommenen Erntegutschwades zugeordnet sind. An die Aufnahmetrommel 7 schließt sich in Flußrichtung des Erntegutes eine Schneideinrichtung 10 an, die im wesentlichen aus einem Förder- und Schneidrotor 11, Schneidmessern 12 und zwischen den Schneidmessern 12 angebrachten Abstreifern 13 besteht. Daran anschließend wird das Erntegut durch die Wirkung einer als Rechenförderer ausgebildeten Fördereinrichtung 14 durch einen Zuführkanal 15 und eine Preßkanaleinlaßöffnung 16 von unten in den Preßkanal 17 gefördert, indem ein hin und her bewegter Preßkolben 18 das Erntegut zu festen Rechteckballen verdichtet. Beim Erreichen einer vorgewählten Länge der Rechteckballen werden diese mit Bindematerial eingebunden. Dazu sind nur andeutungsweise dargestellte Bindenadeln 19 und Knoter 20 vorhanden.

Wie weiterhin aus Fig.1 hervorgeht, erfolgt der Antrieb der Aufsammelkolbenpresse von einer Zapfwelle der Zugund Arbeitsmaschine aus über die Gelenkwelle 4, die über eine Überlastsicherung mit einer Schwungscheibe 21 und einem Hauptgetriebe 22 verbunden ist. Von dort aus verzweigt der Antrieb zu den einzelnen Arbeitsorganen der Aufsammelkolbenpresse. Zur Erzeugung einer hin- und hergehenden Bewegung des Preßkolbens 18 im Preßkanal 17 ist ein Kurbelantrieb 23 vorgesehen, der im Hauptgetriebe 22 der Aufsammelkolbenpresse gelagert ist und von diesem aus angetrieben wird. Der Antrieb der Fördereinrichtung 14 zum Befüllen und Entleeren des Zuführkanales 15 erfolgt im dargestellten Ausführungsbeispiel durch eine nicht dargestellte Antriebsverbindung an der bezüglich der Fahrt- und Arbeitsrichtung F der Aufsammelkolbenpresse linken Maschinenseite und erstreckt sich zwischen dem Hauptgetriebe 22 und der Fördereinrichtung 14.

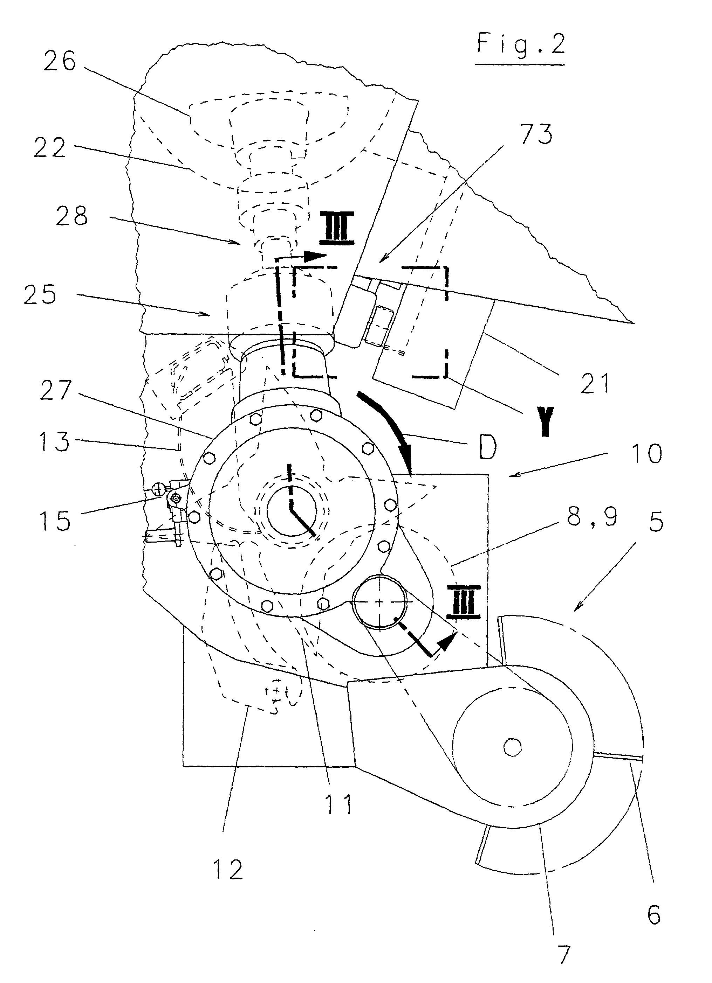

Wie insbesondere aus der Fig.2 hervorgeht, erstreckt sich ein erfindungsgemäßer, eine Freilaufkupplung 24 enthaltender Antriebsstrang 25 vom Hauptgetriebe 22 zum Förder- und Schneidrotor 11 und wird dabei von einem vom Hauptgetriebe 22 abzweigenden Winkelgetriebe 26, einem Verteilergetriebe 27 und einer dazwischen angebrachten Wellenverbindung 28 gebildet. Vorteilhafterweise erfolgt der Antrieb der aus der Aufnahmetrommel 7 und den Querförderschnecken 8,9 bestehenden Aufnahmeeinrichtung 5 über geeignete Antriebsmittel wie Kettentriebe oder dgl. von dem Förder- und Schneidrotor 11 aus.

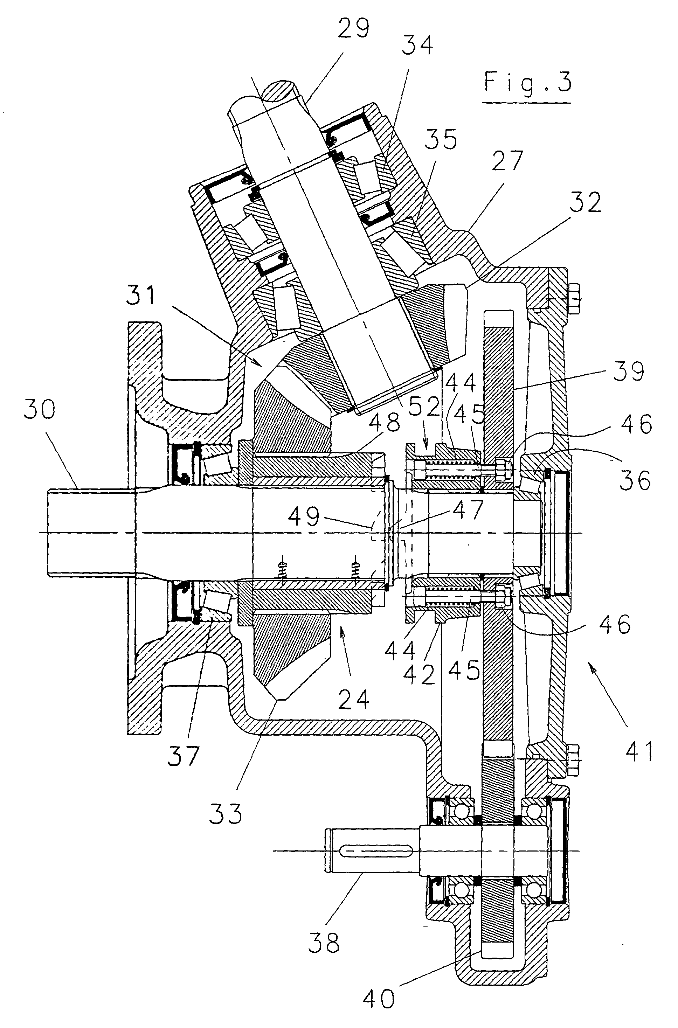

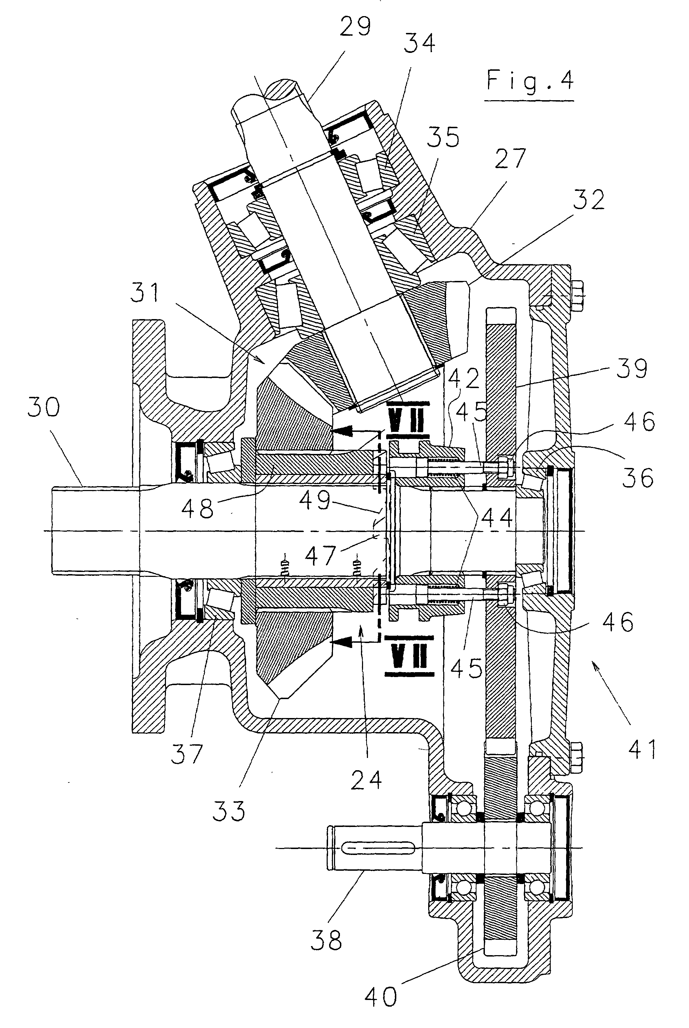

In den Figuren 3 und 4 ist eine Schnittdarstellung des Verteilergetriebes 27 näher veranschaulicht. Daraus ist zu ersehen, daß das Verteilergetriebe 27 im wesentlichen aus einer Eingangswelle 29 und einer Ausgangswelle 30 besteht, auf denen ein Kegelradpaar 31 bildende Kegelräder 32,33 angeordnet sind. Die Ausgangswelle 30 des Verteilergetriebes 27 ist beispielsweise über eine Gelenkwelle mit einer Antriebswelle des Förder- und Schneidrotors 11 (Fig.1 und 2) verbindbar. In einer vorteilhaften Ausbildung der Erfindung ist es vorgesehen, die Freilaufkupplung 24 als Verbindungs- und Befestigungselement auszubilden, welches sich zwischen dem Kegelrad 33 und der Ausgangswelle 30 befindet. Zur Lagerung der Eingangswelle 29 und der Ausgangswelle 30 sind Wälzlager 34,35,36,37 vorgesehen. Eine Weiterleitung des Antriebes des Förder- und Schneidrotors 11 zur Aufnahmeeinrichtung 5 erfolgt mittels einer weiteren Ausgangswelle 38, die über Stirnräder 39,40 mit der Ausgangswelle 30 verbunden ist. Zur Abdichtung weist das Verteilergetriebe 27 Dichtringe auf, so daß ein Eindringen von Schmutz oder ein Austreten von Schmiermittel aus dem Verteilergetriebe 27 sicher vermieden wird. Abweichend von und/oder ergänzend zu den vorstehenden Ausführungen kann die Freilaufkupplung 24 so angeordnet und ausgebildet sein, wie es in der DE 297 03 621 U1 offenbart ist.

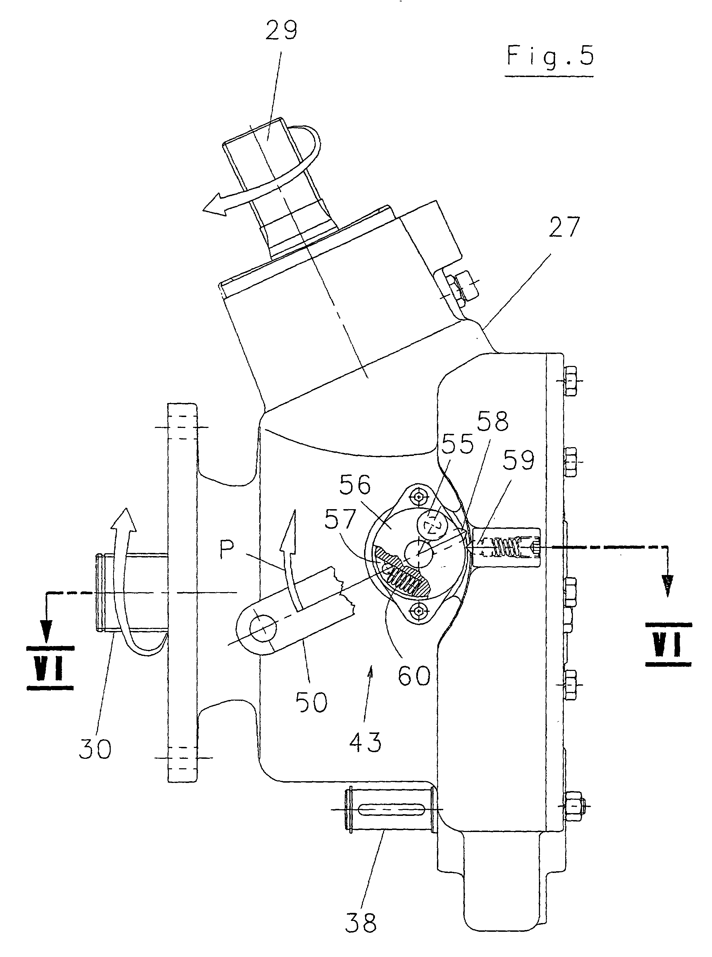

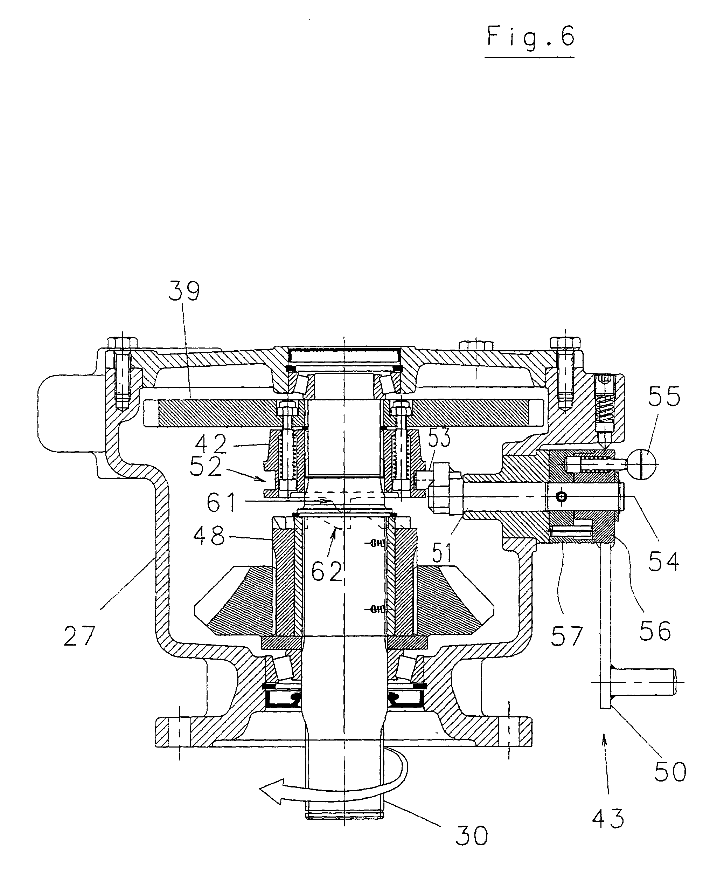

Wie aus den Figuren 3 und 4 weiterhin hervorgeht, ist dem Verteilergetriebe 27 eine Schaltungsanordnung 41 zugeordnet, die im wesentlichen aus einer Schiebemuffe 42 und einer Schalthebelanordnung 43 (siehe Fig.5 und 6) gebildet ist. Die Schiebemuffe 42 ist dabei über eine Kerbverzahnung oder einer ähnlichen formschlüssigen Verbindung mit der Ausgangswelle 30 verbunden und kann dadurch aus der in Fig. 3 gezeigten Stellung, in der der Freilaufzustand der Freilaufkupplung 24 nicht aufgehoben ist, in eine in Fig.4 gezeigte den Freilaufzustand aufhebende Stellung und zurück überführt werden. Über Federelemente 44 und diese durchsetzende Schrauben 45, die über Muttern 46 mit dem Stirnrad 39 verbunden sind, wird die Schiebemuffe 42 federnd nachgiebig in einer den Freilaufzustand der Freilaufkupplung 24 nicht aufhebenden Stellung gehalten. Zur Aufhebung des Freilaufzustandes weist die Schiebemuffe 42 einen oder mehrere Mitnehmer 47 auf, die mit einer an einem Freilaufgehäuse 48 der Freilaufkupplung 24 angebrachten Verzahnung 49 in Eingriff bringbar sind.

Eine Ausführungsform der Schalthebelanordnung 43 ist in den Figuren 5 und 6 näher veranschaulicht. Wie aus diesen Figuren hervorgeht, beinhaltet die Schalthebelanordnung im wesentlichen einen Schalthebel 50, der mit einer Schaltwelle 51 zusammenwirkt, die mit einem in eine Nut 52 eingreifenden Zapfen 53 versehen ist. Durch eine Drehbewegung des Schalthebels 50 um eine Achse 54 kann nun auf zweierlei Art und Weise ein Schaltvorgang (Aufhebung des Freilaufzustandes der Freilaufkupplung 24) eingeleitet werden. Zum ersten besteht die Möglichkeit, bei einer Übereinstimmung der Mitnehmer 47 mit der verzahnung 49 den Schaltvorgang direkt durchzuführen, wobei ein federnd nachgiebig angebrachter Arretierstift 55 in einer Stellung verbleibt, in der eine Nabe 56 des Schalthebels 50 und eine mit der Schaltwelle 51 verbundene Buchse 57 miteinander gekoppelt sind (Fig.6). Zum zweiten ist es möglich, durch ein Herausziehen des Arretierstiftes 55 die Verbindung zwischen der Nabe 56 des Schalthebels 50 und der Buchse 57 der Schaltwelle 51 zu lösen, so daß dann der Schalthebel 50 aus der Ruhestellung (Fig.5) in Pfeilrichtung P in eine Vorwahlstellung überführt werden kann, in der der Schalthebel 50 durch Wirkung eines Nocken 58 nach einem Passieren eines federnd nachgiebigen Haltebolzens 59 vorläufig arretiert ist. Durch die Wirkung eines Federelementes 60 wird eine Vorspannkraft aufgebracht, durch die beim Erreichen der Übereinstimmung der Mitnehmer 47 mit der Verzahnung 49 die Schiebemuffe 42 mit dem Freilaufgehäuse 48 selbsttätig in Eingriff bringbar ist. Dabei gelangt die Buchse 57 der Schaltwelle 51 in eine Stellung, in der die Verbindung zwischen der Nabe 56 und der Buchse 57 durch den Arretierstift 55 ebenfalls selbsttätig wieder hergestellt wird. Nach einem erfolgten Zurückdrehen des Förder- und Schneidrotors 11 kann der Freilaufzustand der Freilaufkupplung 24 dadurch wieder hergestellt werden, daß bei der Drehrichtungsumkehr aus der Rückdrehrichtung R in die Arbeitsdrehrichtung D durch das Abgleiten von rückwärtigen Zahnschrägen 61,62 gegeneinander die Mitnehmer 47 der Schiebemuffe 42 und die Verzahnung 49 des Freilaufgehäuses 48 selbsttätig außer Eingriff gebracht werden. Der Schalthebel 50 der Schalthebelanordnung 43 gelangt dabei ebenfalls selbsttätig aus der Vorwahlstellung zurück in die Ruhestellung.

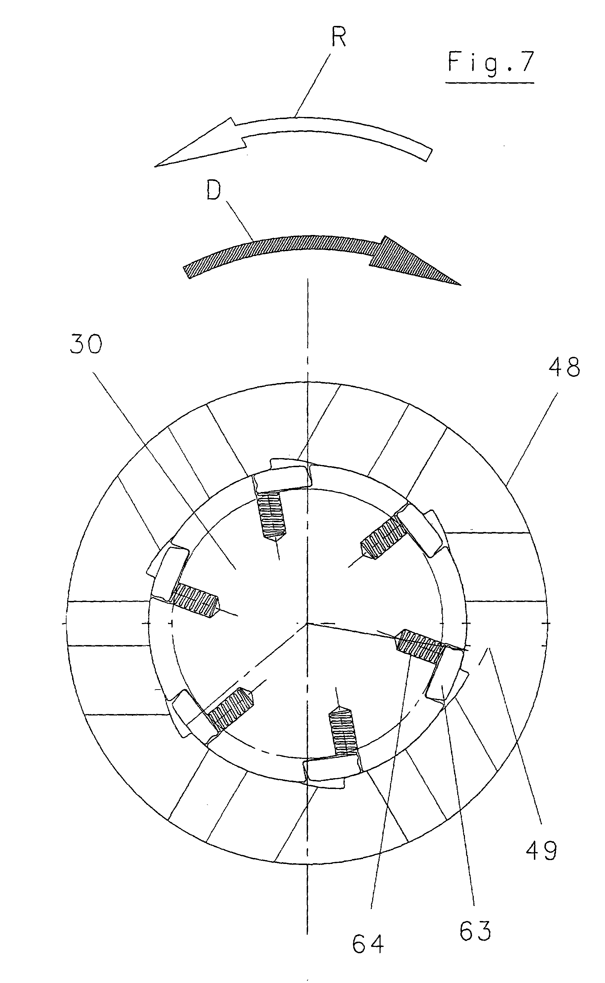

In Fig.7 ist eine mögliche Ausführungsform der Freilaufkupplung 24 in einer Schnittdarstellung veranschaulicht. Dabei sind Mitnehmer 63 vorgesehen, über die in der Arbeitsdrehrichtung D des Freilaufgehäuses 48 eine Verbindung zwischen der Ausgangswelle 30 und dem Freilaufgehäuse 48 hergestellt wird. Die Mitnehmer 63 werden dazu von Druckfedern 64 abgestützt. In der Rückdrehrichtung R des Freilaufgehäuses 48 dagegen bleibt die Ausgangswelle 30 und damit der Förder- und Schneidrotor 11 stehen. Erst durch den Eingriff der Mitnehmer 47 der Schiebemuffe 42 (Fig. 3 und 4) in die Verzahnung 49 des Freilaufgehäuses 48 wird auch in der Rückdrehrichtung R eine formschlüssige Verbindung zwischen dem Freilaufgehäuse 48 und der Ausgangswelle 30 geschaffen.

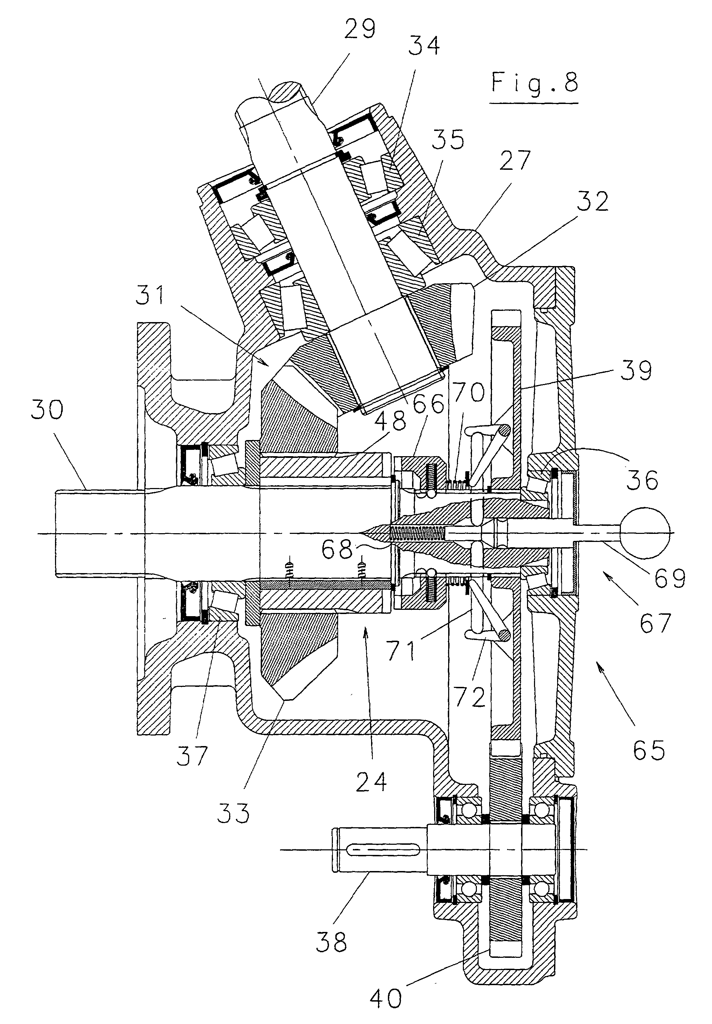

In Fig.8 ist ein weiteres mögliches Ausführungsbeispiel einer erfindungsgemäßen Schaltungsanordnung 65 zur Aufhebung des Freilaufzustandes der Freilaufkupplung 24 dargestellt, welche im wesentlichen aus einer Schiebemuffe 66 und einer Schalthebelanordnung 67 zur Einleitung eines Schaltvorganges besteht. Entgegen der Vorspannkraft eines Federelementes 68 kann ein Schalthebel 69 der Schalthebelanordnung 67 in eine Vorwahlstellung bewegt werden, wobei ein weiteres Federelement 70 vorgespannt wird. Durch die Wirkung dieser Vorspannkraft sind Mitnehmer der Schiebemuffe 66 mit dem Freilaufgehäuse 48 in Eingriff bringbar. Zur vorläufigen Arretierung des Schalthebels 69 in der Vorwahlstellung sind Taster 71 vorgesehen, welche über Umlenkhebel 72 mit der Vorspannkraft des Federelementes 70 beaufschlagt sind. Dadurch wird es ermöglicht, daß zum Zeitpunkt der Aufhebung des Freilaufzustandes der Freilaufkupplung 24 (die Mitnehmer der Schiebemuffe 66 gelangen mit der Verzahnung des Freilaufgehäuses in Eingriff) die Vorspannkraft des Federelementes 70 stark abnimmt und somit der Schalthebel durch die Federkraft des Federelementes 68 in die Ruhestellung gelangt. Die Wiederherstellung des Freilaufzustandes der Freilaufkupplung wird auch in diesem Ausführungsbeispiel durch eine Drehrichtungsumkehr eingeleitet.

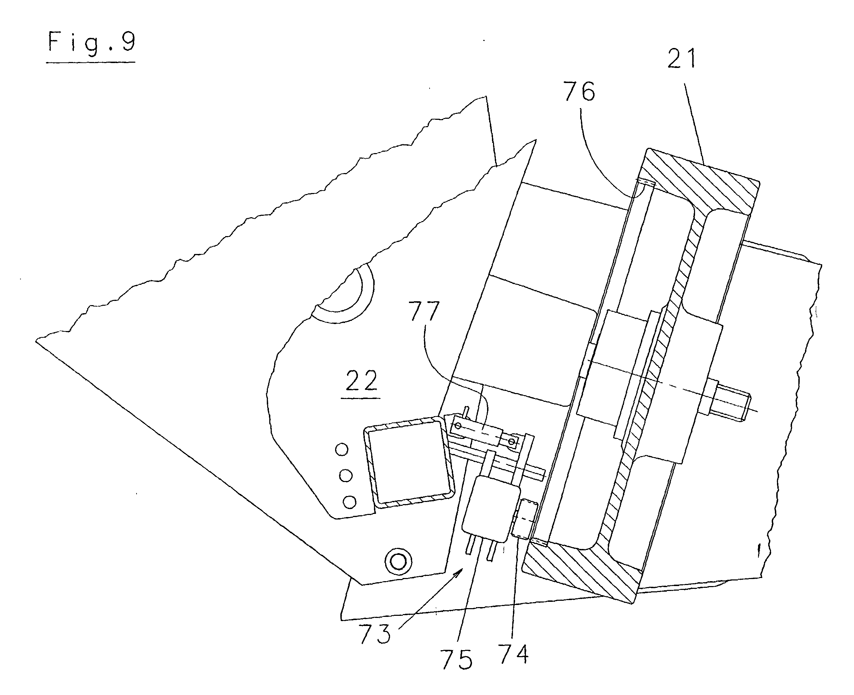

Wie bereits in den Figuren 1 und 2 angedeutet und in Fig.9 näher veranschaulicht kann erfindungsgemäß eine Rückdrehbewegung des Förder- und Schneidrotors 11 manuell oder durch eine Hilfsantriebseinrichtung 73 eingeleitet werden. Dabei ist es vorgesehen, die Hilfsantriebsvorrichtung 73 so an der Aufsammelkolbenpresse anzubringen, daß diese vorzugsweise für den Zeitraum des Zurückdrehens des Förder- und Schneidrotors 11 mit der Schwungscheibe 21 der Aufsammelkolbenpresse in Eingriff gebracht werden kann. Nach der Erfindung kann die Hilfsantriebseinrichtung 73 gleichermaßen als eine elektrisch oder hydraulisch angetriebene Vorrichtung ausgebildet sein. In dem Ausführungsbeispiel in Fig.9 ist es vorgesehen, einen mit einem Stirnrad 74 versehenen hydraulischen Antriebsmotor 75 zur Einleitung der Rückdrehbewegung einzusetzen, wobei das Stirnrad 74 durch eine Verschiebung des hydraulischen Antriebsmotors 75 mit einer der Schwungscheibe 21 zugeordneten Innenverzahnung 76 in Eingriff bringbar ist. Die Verschiebung des Antriebsmotors 75 ist beispielsweise durch eine hydraulische Kolben-Zylinder-Anordnung 77 erreichbar.

## Patentansprüche

1. Aufsammelkolbenpresse mit einer Aufnahmeeinrichtung (5) für landwirtschaftliche Erntegüter, mit einem Hauptgetriebe (22) und mit einem von diesem abzweigenden Kurbelantrieb (23) zum Antrieb eines in einem Preßkanal (17) hin- und hergehenden Preßkolbens (18) und mit einem vom Hauptgetriebe (22) abzweigenden Antriebsstrang, welcher zum gemeinsamen Antrieb einer Fördereinrichtung (14) zum Befüllen und Entleeren eines dem Preßkanal (17) vorgeordneten Zuführkanales (15) und eines Förder- und Schneidrotors (11) mit oder ohne antriebsmäßig nachgeordneter Aufnahmeeinrichtung (5) oder zum alleinigen Antrieb eines Förder- und Schneidrotors (11) mit oder ohne antriebsmäßig nachgeordneter Aufnahmeeinrichtung (5) vorgesehen ist und eine eine der vorgesehenen Arbeitsdrehrichtung (Pfeil D) des Förder- und Schneidrotors (11) entgegen gerichtete Drehbewegung ausschließende Freilaufkupplung (24) aufweist, **dadurch gekennzeichnet, daß** der während des Normalbetriebes der Aufsammelkolbenpresse immer vorliegende Freilaufzustand der antriebsmäßig zwischen dem Hauptgetriebe (22) und dem Förder- und Schneidrotor (11) angeordneten Freilaufkupplung (24) nur zur gezielten Einleitung einer Rückdrehbewegung des Förder- und Schneidrotors (11) zur Beseitigung einer Störung durch manuellen Eingriff mittels einer Schaltungsanordnung (41,65) aufhebbar ist und sich nach Beseitigung der Störung bei einer Drehrichtungsumkehr (Pfeil D) des Antriebsstranges auf Normalbetrieb der Aufsammelkolbenpresse wieder herstellen läßt.

2. Aufsammelkolbenpresse nach Anspruch 1, **dadurch gekennzeichnet, daß** der Schaltvorgang der Schaltungsanordnung (41,65) zur Aufhebung des Freilaufzustandes der Freilaufkupplung (24) vorwählbar ist.

3. Aufsammelkolbenpresse nach Anspruch 1 oder 2, **dadurch gekennzeichnet, daß** die Schaltungsanordnung (41,65) zur Aufhebung des Freilaufzustandes der Freilaufkupplung (24) eine Schiebemuffe (42,66) aufweist, welche zur Aufhebung des Freilaufzustandes mit einem Freilaufgehäuse (48) der Freilaufkupplung (24) in Eingriff bringbar ist.

4. Aufsammelkolbenpresse nach einem der Ansprüche 1 bis 3, **dadurch gekennzeichnet, daß** die Schaltungsanordnung (41, 65) zur Aufhebung des Freilaufzustandes der Freilaufkupplung (24) eine Schalthebelanordnung (43,67) beinhaltet, durch die der Eintritt einer formschlüssigen Verbindung zwischen der Schiebemuffe (42,66) und dem Freilaufgehäuse (48) vorwählbar ist.

5. Aufsammelkolbenpresse nach Anspruch 4, **dadurch gekennzeichnet, daß** ein Schalthebel (50,69) der Schalthebelanordnung (43,67) in eine Vorwahlstellung überführbar und dort arretierbar ist.

6. Aufsammelkolbenpresse nach Anspruch 5, **dadurch gekennzeichnet, daß** der Schalthebel (50,69) der Schalthebelanordnung (43,67) in der Vorwahlstellung durch federnd nachgiebige Rastelemente arretierbar ist.

7. Aufsammelkolbenpresse nach einem der Ansprüche 1 bis 6, **dadurch gekennzeichnet, daß** Mitnehmer (47) der Schiebemuffe (42,66) unter der Einwirkung einer von Federelementen (60,70) aufgebrachten Vorspannkraft selbsttätig mit einer Verzahnung (49) des Freilaufgehäuses (48) in Eingriff bringbar sind, wenn sich der Schalthebel (50,69) der Schalthebelanordnung (43,67) in der Vorwahlstellung befindet.

8. Aufsammelkolbenpresse nach einem der Ansprüche 1 bis 7, **dadurch gekennzeichnet, daß** die Rückdrehbewegung des Förder- und Schneidrotors (11) manuell an einer dem Hauptgetriebe (22) vorgeordneten Schwungscheibe (21) einleitbar ist.

9. Aufsammelkolbenpresse nach einem der Ansprüche 1 bis 8, **dadurch gekennzeichnet, daß** zur Einleitung der Rückdrehbewegung des Förder- und Schneidrotors (11) eine Hilfsantriebseinrichtung (73) vorgesehen ist.

10. Aufsammelkolbenpresse nach einem der Ansprüche 1 bis 9, **dadurch gekennzeichnet, daß** zur Einleitung der Rückdrehbewegung des Förder- und Schneidrotors (11) an der Schwungscheibe (21) eine Hilfsantriebseinrichtung (73) vorgesehen ist.

11. Aufsammelkolbenpresse nach Anspruch 10, **dadurch gekennzeichnet, daß** die Hilfsantriebseinrichtung (73) zur Einleitung der Rückdrehbewegung nur für den Zeitraum des Zurückdrehens des Förder- und Schneidrotors (11) mit der Schwungscheibe (21) in Eingriff bringbar ist.

12. Aufsammelkolbenpresse nach einem der Ansprüche 1 bis 11, **dadurch gekennzeichnet, daß** die Schalthebelanordnung (43,67) so ausgebildet ist, daß ein selbsttätiges Wiederherstellen des Freilaufzustandes der Freilaufkupplung (24) erreichbar ist.

13. Aufsammelkolbenpresse nach einem der Ansprüche 1 bis 12, **dadurch gekennzeichnet, daß** das selbsttätige Wiederherstellen des Freilaufzustandes der Freilaufkupplung (24) durch eine Drehrichtungsumkehr aus einer Rückdrehrichtung (R) in die Arbeitsdrehrichtung (D) einleitbar ist.

14. Aufsammelkolbenpresse nach einem der Ansprüche 3 bis 13, **dadurch gekennzeichnet, daß** das selbsttätige Wiederherstellen des Freilaufzustandes durch ein Abgleiten von rückwärtigen Zahnschrägen der Verzahnung (49) und Mitnehmern (47) der Schiebemuffe (42,66) gegeneinander erreichbar ist.

15. Aufsammelkolbenpresse nach einem der Ansprüche 3 bis 14, **dadurch gekennzeichnet, daß** zur Unterstützung des Trennvorganges der Schiebemuffe (42,66) von dem Freilaufgehäuse (48) zur Wiederherstellung des Freilaufzustandes der Freilaufkupplung (24) Federelemente vorgesehen sind.

## Claims

1. Pick-up piston press with a receiving device (5) for agricultural harvested products, with a main gear (22), with a crank drive (23) branched from it, for driving a press piston (18) moving backwards and forwards in a press duct (17), and with a drive line branching from the main gear (22), which drive line is provided for driving both a conveying device (14) for filling and emptying a fed duct (15) arranged in front of the press duct (17), and a conveying and cutting rotor (11), with or without a receiving device (5) arranged after the drive, or for driving a conveying and cutting rotor (11) only, with or without a receiving device (5) arranged after the drive, and exhibits an overrunning clutch (24) that prevents a rotary movement opposing the specified working direction of rotation (D) of the conveying and cutting rotor (11), **characterised in that** the overrunning condition of the overrunning clutch (24) arranged, in terms of the drive, between the main gear (22) and the conveying and cutting rotor (11), a condition which is always present during normal operation of the pick-up piston press, can only be cancelled for specifically introducing a backward rotation movement of the conveying and cutting rotor (11), in order to remove a fault manually by means of a switching device (41, 65), and **in that** the pick-up piston press can be restored to normal operation after removal of the fault when the direction of rotation (D) of the drive line is reversed.

2. Pick-up piston press according to claim 1, **characterised in that** the switching process of the switching device (41, 65) can be pre-selected for cancelling the overrunning condition of the overrunning clutch (24).

3. Pick-up piston press according to claim 1 or 2, **characterised in that** the switching device (41, 65) for cancelling the overrunning condition of the overrunning clutch (24) exhibits a sliding sleeve (42, 66) which can be engaged with an overrunning housing (48) of the overrunning clutch (24) in order to cancel the overrunning condition.

4. Pick-up piston press according to one of claims 1 to 3, **characterised in that** for the purpose of cancelling the overrunning condition of the overrunning clutch (24), the switching device (41, 65) incorporates a switch lever device (43, 67) by means of which the initiation of a positive connection between the sliding sleeve (42, 66) and the overrunning housing (48) may be pre-selected.

5. Pick-up piston press according to claim 4, **characterised in that** a switch lever (50, 69) of the switch lever device (43, 67) can be transferred to a pre-selected position and can be locked **in that** position.

6. Pick-up piston press according to claim 5, **characterised in that** the switch lever (50, 69) of the switch lever device (43, 67) can be locked in the pre-selected position by flexible, sprung stop elements.

7. Pick-up piston press according to one of claims 1 to 6, **characterised in that** carriers (47) of the sliding sleeve (42, 66) can be automatically engaged with a toothing (49) of the overrunning housing (48) under the influence of a initial tension force applied by spring elements (60, 70) when the switch lever (50, 69) of the switch lever device (43, 67) is in the pre-selected position.

8. Pick-up piston press according to one of claims 1 to 7, **characterised in that** the backward rotary movement of the conveying and cutting rotor (11) can be initiated manually on a disk type flywheel (21) arranged in front of the main gear (22).

9. Pick-up piston press according to one of claims 1 to 8, **characterised in that** an auxiliary drive device (73) is provided for initiating the backward rotation movement of the conveying and cutting rotor (11).

10. Pick-up piston press according to one of claims 1 to 9, **characterised in that** an auxiliary drive device (73) is provided for initiating the backward rotation movement of the conveying and cutting rotor (11) on the disk type flywheel (21).

11. Pick-up piston press according to claim 10, **characterised in that** the auxiliary drive device (73) for initiating the backward rotation movement can only be engaged with the disk type flywheel (21) for the period of backward rotation of the conveying and cutting rotor (11).

12. Pick-up piston press according to one of claims 1 to 11, **characterised in that** the switch lever device (43, 67) is designed so that the overrunning condition of the overrunning clutch (24) can be restored automatically.

13. Pick-up piston press according to one of claims 1 to 12, **characterised in that** the automatic restoration of the overrunning condition of the overrunning clutch (24) can be initiated by the reversal of the direction of rotation from a backward rotation direction (R) to the working direction of rotation (D).

14. Pick-up piston press according to one of claims 3 to 13, **characterised in that** the automatic restoration of the overrunning condition can be achieved by arranging for rear tooth slopes of the toothing (49) and carriers (47) of the sliding sleeve (42, 66) to slide against each other.

15. Pick-up piston press according to one of claims 3 to 14, **characterised in that** spring elements are provided for supporting the process of separating the sliding sleeve (42, 66) from the overrunning housing (48) to restore the overrunning condition of the overrunning clutch (24).

## Revendications

1. Presse à balles comportant une installation de réception (5) pour recevoir des produits de récolte, agricoles, comprenant :
- une transmission principale et un entraînement à manivelle (23) dérivant de celle-ci pour entraîner un piston (18) effectuant un mouvement de va et vient dans un canal de presse (17) ; et
- une ligne de transmission dérivant de la transmission principale (22) pour entraîner en commun une installation de transfert (14) pour remplir et vider un canal d'alimentation (15), en amont du canal de presse (17) et un rotor de transfert et de coupe (11) avec ou sans installation de réception (5), en aval dans la ligne d'entraînement ou pour l'entraînement seul d'un rotor de transfert et de coupe (11) avec ou sans installation de réception (5) en aval, dans le sens de l'entraînement ; et
- un embrayage à roue libre (24) interdisant tout mouvement de rotation dirigé dans le sens opposé du sens de rotation de travail prévu (D) du rotor de transfert et de coupe (11),
**caractérisée en ce que**
l'état de roue libre de l'embrayage à roue libre (24) prévu dans le sens de l'entraînement entre la transmission principale (22) et le rotor de transfert et de coupe (11), existe toujours pendant le fonctionnement normal de la presse, et ne peut être neutralisé que pour induire de manière précise un mouvement de rotation inverse du rotor de transfert et de coupe (11) pour éliminer une perturbation, par action manuelle à l'aide d'un dispositif de commutation (41, 65) et après élimination de la perturbation cet état se rétablit de nouveau par une inversion de sens de rotation (D) de la ligne d'entraînement passant en mode normal pour la presse.

2. Presse à balles selon la revendication 1,
**caractérisée en ce que**
l'opération de commutation du dispositif de commutation (41, 65) pour éliminer l'état de roue libre de l'embrayage (24) est présélectionnable.

3. Presse à balles selon la revendication 1 ou 2,
**caractérisée en ce que**
le dispositif de commutation (41, 65) pour éliminer l'état de roue libre de l'embrayage (24) comporte un manchon coulissant (42, 66) qui peut être mis en prise avec un boîtier de roue libre (48) de l'embrayage (24) pour neutraliser l'état de roue libre.

4. Presse à balles selon l'une des revendications 1 à 3,
**caractérisée en ce que**
le dispositif de commutation (41, 65) comporte un dispositif à levier de commutation (43, 67) pour neutraliser l'état de roue libre de l'embrayage (24) qui présélectionne l'établissement d'une liaison par la forme entre le manchon coulissant (42, 66) et le boîtier de roue libre (48).

5. Presse à balles selon la revendication 4,
**caractérisée en ce qu'**
un levier de commutation (50, 69) du dispositif à levier de commutation (43, 67) peut être mis dans une position présélectionnée et y être bloqué.

6. Presse à balles selon la revendication 5,
**caractérisée en ce que**
le levier de commutation (50, 69) du dispositif à levier de commutation (43, 67) peut être bloqué dans la position présélectionnée par des éléments d'encliquetage souples, élastiques.

7. Presse à balles selon l'une des revendications 1 à 6,
**caractérisée en ce que**
des organes d'entraînement (47) du manchon coulissant (42, 66) peuvent être mis en prise sous l'action d'une force de précontrainte appliquée par des éléments de ressort (60, 70), automatiquement avec une denture (49) du boîtier de roue libre (48) si le levier de commutation (50, 69) du dispositif à levier de commutation (43, 67) se trouve en position de présélection.

8. Presse à balles selon l'une des revendications 1 à 7,
**caractérisée en ce que**
le mouvement de rotation inverse du rotor de transfert et de coupe (11) peut être lancé manuellement par un volant d'inertie (21) en amont de la transmission principale (22).

9. Presse à balles selon l'une des revendications 1 à 8,
**caractérisée en ce qu'**
elle comprend un dispositif d'entraînement auxiliaire (73) pour lancer le mouvement de rotation inverse du rotor de transfert et de coupe (11).

10. Presse à balles selon l'une des revendications 1 à 9,
**caractérisée en ce qu'**
elle comporte une installation d'entraînement auxiliaire (73) pour lancer le mouvement de rotation inverse du rotor de transfert et de coupe (11) sur le volant d'inertie (21).

11. Presse à balles selon la revendication 10,
**caractérisée en ce que**
pour lancer le mouvement de rotation inverse, l'installation d'entraînement auxiliaire (73) ne se met en prise avec le volant d'inertie (21) que pour la durée de rotation inverse du rotor de transfert et de coupe (11).

12. Presse à balles selon l'une des revendications 1 à 11,
**caractérisée en ce que**
le dispositif à levier de commutation (43, 67) est réalisé pour permettre un rétablissement automatique de l'état de roue libre de l'embrayage (24).

13. Presse à balles selon l'une des revendications 1 à 12,
**caractérisée en ce que**
le rétablissement automatique de l'état de roue libre de l'embrayage (24) est induit par une inversion de sens de rotation à partir du sens de rotation inverse (R) vers le sens de rotation de travail (D).

14. Presse à balles selon l'une des revendications 3 à 13,
**caractérisée en ce que**
le rétablissement automatique de l'état de roue libre est réalisé en faisant glisser des rampes de dents arrières de la denture (49) et des organes d'entraînement (47) du manchon coulissant (42, 66) les unes sur les autres.

15. Presse à balles selon l'une des revendications 3 à 14,
**caractérisée** ce qu'
elle comprend des éléments de ressort pour soutenir l'opération de séparation du manchon coulissant (42, 66) par rapport au boîtier de roue libre (48) pour rétablir l'état de roue libre de l'embrayage (24).
